# EUROPEAN PATENT APPLICATION

(11) **EP 0 898 888 A1**
(43) Date of publication of application: **03.03.1999**
(21) Application number: 97115005.7
(22) Date of filing: 29.08.1997
(51) Int. Cl.: A01M 1/02, A01M 1/20, A01M 1/24, E04B 1/72

(54) **Device for the control of crawling social and/or congregating insects**

(71) Applicant: RHONE-POULENC AGROCHIMIE, 69009 Lyon (FR)
(72) Inventor: The designation of the inventor has not yet been filed
(74) Representative: Bentham, Stephen

(57) **Abstract**

Device for the control of crawling social and/or congregating insects comprising a bait and a plurality of channels having internal surfaces which carry a delayed-action insecticide, there being at least one intersection between the channels.

## Description

The invention relates to a new device for control of insects more particularly of crawling social and/or congregating insects such as cockroaches and ants.

The control and reduction or elimination of populations of insects is a difficult problem. Many solutions have been suggested and many insecticidal compounds have been used in the art. Among the many existing solutions, a most common one is to kill the insects by means of insecticidal poisons or active ingredients which may be in the form of a bait or of a surface treatment. Whatever is the method of controlling the insects which is worked out, there is a need to have further and better and improved methods to control the insects. There is also the need for increasing the efficacy and performance of devices (any kind of apparatus or traps or the like) and methods which are useful to control the insects.

Social and/or congregating insects are those which are living together and/or have a nest or an area where they feed or rest together or have life together or to where they regularly return. Congregating insects generally meet together in some locus or area whereas social insects interact by means of close or physical contacts of body or head or other body members.

Social and/or congregating insects are particularly difficult to control and destroy because most of them, or at least a substantial part of them, are generally hidden and cannot be reached by direct treatment. Furthermore, the locations of nests are substantially ignored by those interested in the control of the pests.

An object of the instant invention is thus to control social and/or congregating insects.

An object of the instant invention is to provide more efficient devices and methods for controlling social and/or congregating insects.

Another object of the instant invention is to provide an improved method or device to control social and/or congregating insects, especially crawling insects such as cockroaches, ants and termites.

These objects are met in whole or in part by the instant invention.

In the instant invention, "crawling insects" is a term which is used in a broad sense and embraces the walking insects.

The invention relates to a device to control crawling, social and/or congregating insects which device comprises a bait and a plurality of channels the internal surface of which carries a delayed-action insecticide with at least one intersection between the channels. Preferably, the insects controlled are cockroaches, ants or termites. The channels generaly form a network. The coating can be continuous or discontinuous.

The device or system of the instant invention is especialy efficient. It is the more efficient in that it provides to the same insect several and various opportunities to take a dose of insecticide, preferably more than 2, even more preferably 5 times the lethal dose of the insecticide. The multiplicity of these opportunities to take a load or charge an amount of active ingredient is an especially advantageous feature of the invention. This feature of the instant invention whereby one insect is being dosed with more than the lethal dose provides the insect with an opportunity to dose other insects in a social and/or congregating interaction.

The network and the channels allow a substantial freedom of movement of an insect passing though the channels. That is the channels are wide enough to allow the insect to reversibly traverse a channel, to turn around or to pass another insect which is already walking or crawling in a channel. The device of the invention may be considered a housing or also as a container, or a box or a trap. The word channel is used regularly in the instant description and denotes a substantially tubular channel despite other words such as tunnel which may also be appropriate. In this way, the channel is generally inaccessible from above. The channels are preferably of circular cross section.

There is preferably a cross channel junction in the network. A cross-channel junction is generally a point where at least two channels cross thus allowing the insect traversing the junction to make a choice of another channel. In a particularly advantageous embodiment, the junction is a meeting point of several pipes. By locating a bait at a junction point, insects can take several different paths through insecticide coated channels to reach the same bait.

A very preferred device according to the above description of the instant invention is one which controls and preferably destroys crawling social insects, especially cockroaches, ants or termites, which device comprises:
a) at least two tubular channels the internal surface of which comprises a coating which coating comprises an insecticide;
b) at least three entrances;
c) at least one cross-channel junction;
d) a bait comprising the insecticide which is located at a cross-channel junction; and wherein
e) the insecticide has a secondary killing effect and no knockdown effect.

The invention will be more clearly understood from the following description, given by way of example only, with reference to the accompanying drawings, in which:
Figure 1 illustrates an embodiment of the present invention;
Figure 2 illustrates a variation of the embodiment of Figure 1; and
Figures 3 and 4 illustrate alternative embodiments of the present invention.

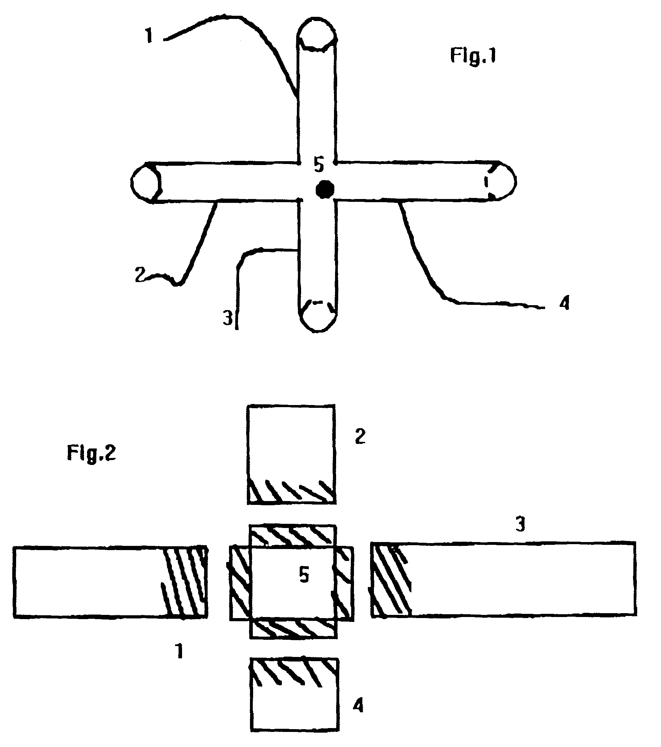

The device includes a number of intersecting channels. In Figure 1, this can be considered as two intersecting channels or four channels 1,2,3,4 which meet at a common junction 6.

Each channel 1,2,3,4 has an opening 8 in its end allowing insects to crawl into or out of the device.

Figure 1 illustrates a bait 5 at the junction. Insecticide may then be coated on the inside of the channels 1,2,3,4. In this way, insects travelling through the device via any of the channels to reach the bait 5 will come into contact with the insecticide.

The channels and junction may be formed together as a single integral unit. However, for ease of assembly, as illustrated in Figure 2, the channels may be manufactured separately and fitted to a junction.

The device generally comprises known materials, preferably plastics. In a particularly advantageous embodiment, the device comprises two or more pipes which form the channels. The pipes generally comprise a plastics composition, most preferably polyvinyl chloride. The device can be of molded or extruded form, in which case the cross-channel junction is formed in the molding or shaping process. Alternatively, the device can comprise externally threaded pipes which are fastened to an internally threaded junction. In another embodiment, the device can comprise channels which are glued or soldered or in any other equivalent fashion, attached to the junction. They can also be attached by a simple push-fit.

The bait generally adheres to the inner surface of the device so that if the device is manipulated no displacement of the bait is observed. The bait is generally inaccessible to human touch via the network. It may be located anywhere in the network, but is preferably substantially centrally located in order to further improve the inaccessibility of the bait to humans. In a particularly preferred embodiment of the invention, the bait is located at a cross channel junction although this is not a necessary location.

By the term delayed-action is generally meant an insecticide that does not kill an insect within 3 minutes of picking up or ingesting the insecticide. That is, a delayed-action insecticide does not have a "knock-down" effect which means that the insect does not immediately begin to die. Preferably, the insect is not killed within 30 minutes of picking up or ingesting the insecticide. Generally the amount of insecticide picked up by the insect and thus the speed of kill depends on the amount of time that the insect spends in the device. In the instant invention, the speed of kill generally ranges from 30 minutes to 8 hours. The term delayed-action also embraces the term "secondary killing effect". By secondary killing effect or secondary killing properties, is meant that the insecticide is able not only to kill the insects which come in direct contact with them, but also to kill insects which come in direct contact with it, but also to kill insects which come into social and/or congregating relationship with the insects which have come into contact with the insecticide.

The wall of a channel comprises an insecticide on its inner surface. The insecticide may be covering the whole surface of the said channel, but it may also cover only a part of this surface. The total or partial covering is rather a matter of convenience to apply said active ingredient on the said surface. The covering is generally greater than 50% of the surface, preferably greater than 80% of the surface. The total amount of inward surface area coated by insecticide is generally in the range from 10 to 1000cm², preferably from 30 to 500cm², most preferably from 50 to 200cm².

The wall of a channel may also comprise an insecticide on its inner surface by means of a coated sleeve which may be inserted inside the channel and rests against the internal surface of the channel. Such a sleeve can be a thin film inwardly coated by the insecticide or impregnated with the insecticide. Alternatively, the sleeve may be a discrete strip comprising the insecticide which is laid on the internal surface of a channel.

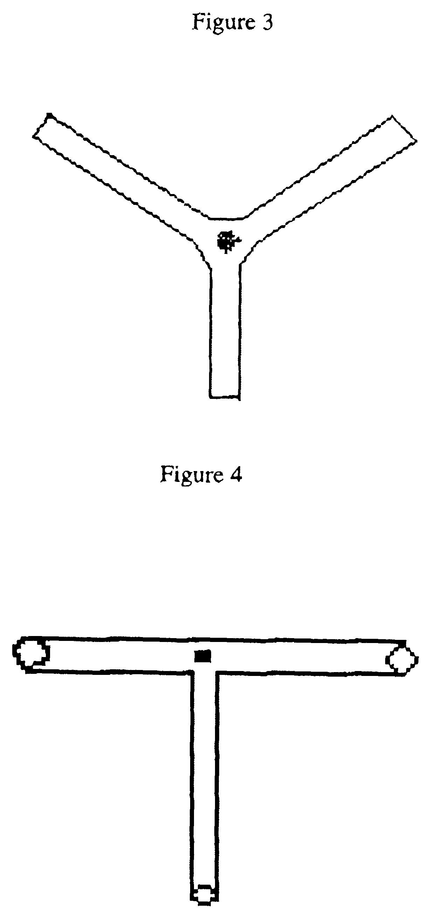

The openings are generally not differentiated by structure or nature in the instant invention. As described above with reference to Figures 1 and 2, there are four openings. Figures 3 and 4 illustrate devices equivalent to that of Figure 1, but having only three openings. It is, of course, also possible to provide five or more openings. They are generally orifices leading from the channels to the outside of the device. Such openings are by their function for the insect called entrances or exits.

The length of a channel in the bait system of the invention is generally in the range from 3 to 25 cm, preferably 5 to 20 cm even though lengths outside these ranges may be considered as quite useful. Longer channels may allow the insects to be dosed with more insecticide. Shorter channels may be an incentive to the insects to traverse the device.

In general, the amount of insecticide on the internal surface of the device ranges from 10 to 100 mg per device, preferably from 15 to 75 mg per device, most preferably from 25 to 50 mg per device. The coverage in insecticide per unit area is generally from 0.01 mg per cm² to 10mg/cm².

The bait is most advantageously an attractive bait such as a foodstuff or pheromone. A bait is considered as being as attractive when the insects has an incentive to visit the bait, or, in other words, to go and try and eat it. The insects appear to have an incentive to visit the bait when more than 50% of the insects walking around are getting into direct contact with the said bait. The attractive quality of the bait may come from either the insecticidally active ingredient by itself or from adjuvants which are also contained in the said bait.

The bait preferably adheres to the insect contacting it. A generally thixotropic formulation is preferred since it is generally more susceptible to be taken in in large amounts by the insects. The bait is most preferably a gel. The bait composition used in the invention may contain any insecticide of any nature provided that the insecticide has a delayed action effect and no direct knock-down effect. In a particularly preferred embodiment of the invention, the bait also the same insecticide that inwardly coats the channels.

The insecticide is preferably (even though not an essential feature of the instant invention) an attractant. By attractant is meant a substance that the insects prefer to eat when they have an alternative food source. In other words, the insecticide represents itself a bait for the insects.

A group of insecticides which are particularly appropriate to the invention (having both a secondary killing effect and an attractant effect) are the 1-substituted-phenyl pyrazoles which have also other appropriate substituents on the pyrazole ring. The 1-arylpyrazoles which can be used according to the instant invention are preferably compounds of formula (I) : 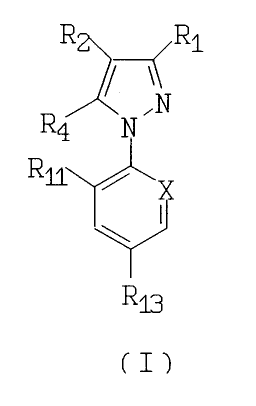 wherein:
R₁ is CN or methyl or a halogen atom;
R₂ is S(O)ₙR₃ or 4,5-dicyanoimidazol-2-yl or haloalkyl;
R₃ is alkyl or haloalkyl;
R₄ is selected from the group consisting of hydrogen, halogen, -NR₅R₆, -C(O)OR₇, -S(O)ₘR₇, alkyl, haloalkyl, -OR₈, -N=C(R₉)(R₁₀) and -C(O)alkyl;
R₅ and R₆ are independently selected from a hydrogen atom, alkyl, haloalkyl, -C(O)alkyl, -C(O)OR_{7,} -S(O)ᵣCF₃; or R₅ and R₆ form together a divalent alkylene radical which may be interrupted by one or more heteroatoms, preferably selected from oxygen, nitrogen and sulfur;
R₇ is selected from alkyl and haloalkyl;
R₈ is selected from alkyl, haloalkyl and hydrogen;
R₉ is selected from hydrogen and alkyl;
R₁₀ is selected from phenyl and heteroaryl each of which is unsubstituted or substituted by one or more hydroxy, halogen, -O-alkyl, -S-alkyl, cyano, or alkyl or combinations thereof;
X is selected from nitrogen and -C-R₁₂;
R₁₁ and R₁₂ are independently selected from halogen, hydrogen, CN and NO₂;
R₁₃ is selected from halogen, haloalkyl, haloalkoxy, -S(O)_{q}CF₃ and -SF₅;
m, n, q, r are independently selected from 0, 1, and 2;
   provided that when R₁ is methyl, R₃ is haloalkyl, R₄ is NH₂, R₁₁ is Cl, R13 is CF₃, and X is N and provided that when R₂ is 4,5-dicyanoimidazol 2-yl, R₄ is Cl, R₁₁ is Cl, R₁₃ is CF₃, and X is =C-Cl.

The alkyl and alkoxy groups and moieties thereof of the formula (I) are preferably lower alkyl and alkoxy groups, that is, groups having one to six carbon atoms. The haloalkyl and haloalkoxy groups likewise preferably have one to four carbon atoms. The haloalkyl and haloalkoxy groups can bear one or more halogen atoms; preferred groups of this type include -CF₃ and -OCF₃. It shall be understood that the ring formed by the divalent alkylene radical represented by R₅ and R₆ and including the nitrogen atom to which R₅ and R₆ are attached is generally a 5, 6, or 7-membered ring. When R₁₀ is heteroaryl, it is preferably pyridyl, most preferably 2-pyridyl. It will be understood that the 1-arylpyrazoles of formula (I) include enantiomers and/or diastereomers thereof.

A preferred group of 1-arylpyrazoles for use in the present invention are those of formula (I) with one or more of the following features wherein:
R₁ is CN;
R₄ is -NR₅R₆;
R₅ and R₆ are independently selected from the hydrogen atom, alkyl, haloalkyl, C(O)alkyl, C(O)OR₇;
X is C-R₁₂; or
R₁₃ is selected from a halogen atom, haloalkyl, haloalkoxy, and -SF₅.

Another preferred group of 1-arylpyrazoles of formula (I) for use in the present invention is that wherein:
R₁ is CN;
R₃ is a haloalkyl radical;
R₄ is NH₂;
X is C-R₁₂,
R₁₁ and R₁₂ represent, independently of one another, a halogen atom; and
R₁₃ is a haloalkyl radical.

A most preferred compound is 5-amino-1-(2,6-dichloro 4-trifluoromethyl phenyl) 4-trifluoromethylsulfinyl-3-cyanopyrazole, hereafter designated as compound (A).

Compounds of formula (I) may be prepared according to known processes, for example as described in International Patent Publications WO 87/3781, 93/6089, and 94/21606 as well as in European Patent Applications 295117, 403300, 385809 or 679650, German Patent Publication 19511269 and United States Patents 5232940 and 5236938 or other process according to the knowledge of a man skilled in the art of chemical synthesis, which is deemed to include Chemical Abstracts and the literature referred to therein. Compositions comprising the compounds of formula (I) may also be prepared according to the teaching of the same prior art or similar publications.

Another aspect of the invention is a method of controlling insects using a device as described herein. Such a method includes the placing of the device in a place frequented by insects

The following non-limiting Examples illustrate the invention.

### Example 1

A cross is made of two tubes as shown in Figure 1. These two tubes comprise four branches (respectively 1 & 2 & 3 & 4) offering four entrances. Each branch is about half the length of the corresponding tube. One tube is 10 cm long (each branch of it is 5 cm long). The other tube is 8 cm long (each branch of it is 4 cm long). At the crossing point is a bait (5). The inner diameter of the tubes is 1.5 cm

The bait has been made apparent in Figure 1 for a better display of the device. This bait is not visible from the outside of the device and is located at the junction of the two tubes.

The inner walls of the tubes are substantially covered by compound (A) in the following manner: an emulsifiable concentrate or suspended concentrate of compound (A) is sprayed or poured through the said tubes and then the tubes are dried to provide an overall dosing of about 25 mg of compound (A) throughout the entire device. After, that, a 5 g adhering bait is put at the junction of the tubes. The bait comprises 0.05 g of compound (A) as well as and several food additives (proteins and sugars) and attractant additives.

### Example 2

A device similar to that of Figure 1 is made but a different mode of building it is used and described according to Figure 2.

The device comprises a) 4 pipes (1, 2, 3, 4) each of which is about 10 cm long and 1.5 cm in inner diameter and has an externally threaded end; and b) a 4-way pipe junction (5) with 4 inwardly threaded openings. Each pipe is inwardly treated with compound (A) and dried. Bait is applied to the inside of the junction and each pipe is attached to the junction.

The device of Example 2 has the same efficacy as the one of Figure 1 / Example 1, but it is much more easily made and the process of applying the insecticidally active ingredient is much safer.

### Example 3:

The device of Example 1 is assembled with 0.1g of a 0.05% bait containing compound (A).

### Example 4:

The device of Example 1 is placed under furniture of a public house which is infested by cockroaches. After three days no longer any cockroaches are seen in the whole room where the said device is located, which is a showing that the nest was destroyed.

## Claims

1. An insecticide delivery device to control crawling, social insects, the device comprising a bait (5) and a plurality of channels (1,2,3,4) the internal surfaces of which carry a delayed-action insecticide with at least one intersection between the channels.

2. A device according to claim 1 wherein the insecticide is an attractant.

3. A device according to claim 1 or 2 whereby, by passing through the device, one insect is dosed with more than 2 times, preferably more than 5 times the lethal dose of insecticide.

4. A device according to claim 1, 2 or 3 wherein the channels (1,2,3,4) allow a substantial freedom of movement of the insect.

5. A device according to any one of the foregoing claims wherein the insecticide coats more than 50% of the inner surface area a channel, preferably more than 80% of the inner surface area of a channel.

6. A device according to any one of the foregoing claims wherein the network comprises three openings, preferably four openings.

7. A device according to any one of the foregoing claims wherein the bait adheres to the device.

8. A device according to any one of the foregoing claims wherein the bait is an attractive bait.

9. A device according to any one of the foregoing claims wherein the bait is a gel.

10. A device according to any one of the foregoing claims wherein the bait is located at a channel intersection.

11. A device according to any one of the foregoing claims wherein the insecticide is a compound of formula (I): 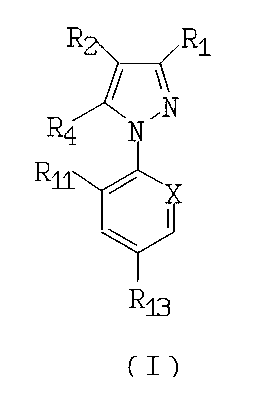 wherein:
R₁ is CN or methyl or a halogen atom;
R₂ is S(O)ₙR₃ or 4,5-dicyanoimidazol-2-yl or haloalkyl;
R₃ is alkyl or haloalkyl;
R₄ is selected from the group consisting of hydrogen, halogen, -NR₅R₆, -C(O)OR₇,
-S(O)ₘR₇, alkyl, haloalkyl, -OR₈, -N=C(R₉)(R₁₀) and - C(O)alkyl;
R₅ and R₆ are independently selected from a hydrogen atom, alkyl, haloalkyl, -C(O)alkyl, -C(O)OR_{7,} -S(O)ᵣCF₃; or R₅ and R₆ form together a divalent alkylene radical which may be interrupted by one or more heteroatoms, preferably selected from oxygen, nitrogen and sulfur;
R₇ is selected from alkyl and haloalkyl;
R₈ is selected from alkyl, haloalkyl and hydrogen;
R₉ is selected from hydrogen and alkyl;
R₁₀ is selected from phenyl and heteroaryl each of which is unsubstituted or substituted by one or more hydroxy, halogen, -O-alkyl, -S-alkyl, cyano, or alkyl or combinations thereof;
X is selected from nitrogen and -C-R₁₂;
R₁₁ and R₁₂ are independently selected from halogen or hydrogen or CN or NO₂;
R₁₃ is selected from halogen, haloalkyl, haloalkoxy, - S(O)_{q}CF₃, -SF₅;
m, n, q, r are independently selected from 0, 1, and 2;
provided that when R₁ is methyl: R₃ is haloalkyl, R₄ is NH₂, R₁₁ is Cl, R₁₃ is CF₃, and X is N; or
R₂ is 4,5-dicyanoimidazol-2-yl, R₄ is Cl, R₁₁ is Cl, R₁₃ is CF₃, and X is =C-Cl.

12. A device according to any one of the foregoing claims wherein the insecticide is a compound of formula (I) with one or more of the following features wherein:
R₁ is CN;
R₄ is -NR₅R₆;
R₅ and R₆ are independently selected from the hydrogen atom, alkyl, haloalkyl, C(O)alkyl, C(O)OR₇;
X is C-R₁₂; or
R₁₃ is selected from a halogen atom, haloalkyl, haloalkoxy, and -SF₅.

13. A device which controls and preferably destroys crawling social insects, especially cockroaches, ants or termites, which device comprises:
a) at least two tubular channels, the internal surface of which comprises a coating, which coating comprises:
b) at least three entrances;
c) at least one cross-channel junction;
d) a bait comprising the insecticide which is located at a cross-channel junction; and wherein
e) the insecticide has a secondary killing effect and no knockdown effect.

14. A method of controlling insects which method comprises the use of a device as defined in any one of claims 1 to 13.
